# EUROPEAN PATENT APPLICATION

(11) **EP 4 156 342 A1**
(43) Date of publication of application: **29.03.2023**
(21) Application number: 22779190.2
(22) Date of filing: 13.05.2022
(51) Int. Cl.: H01M 4/62

(54) **MULTI-ELEMENT POSITIVE ELECTRODE MATERIAL, AND PREPARATION METHOD THEREFOR AND APPLICATION THEREOF**

(30) Priority: 07.12.2021 CN 202111486692; 24.12.2021 CN 202111599369
(71) Applicant: Beijing Easpring Material Technology Co., Ltd., Beijing 100160 (CN)
(72) Inventor: WANG, Yu, Beijing 100160 (CN); YUE, Peng, Beijing 100160 (CN); LIU, Yafei, Beijing 100160 (CN); CHEN, Yanbin, Beijing 100160 (CN)
(74) Representative: Ström & Gulliksson AB
(86) International application number: PCT/CN2022/092619
(87) International publication number: WO 2022/207010

(57) **Abstract**

The present disclosure relates to the technical field of lithium ion batteries. Disclosed are a multi-element positive electrode material, and a preparation method therefor and the application thereof. The ratio l₍₀₀₆₎/l₍₀₁₂₎, obtained by means of XRD, of the peak intensity I₍₀₀₆₎ of a (006) crystal plane to the peak intensity I₍₀₁₂₎ of a (012) crystal plane of the multi-element positive electrode material is greater than or equal to 0.8; and the ratio A₍₀₀₆₎/A₍₀₁₂₎, obtained by means of XRD, of the peak area A₍₀₀₆₎ of the (006) crystal plane to the peak area A₍₀₁₂₎ of the (012) crystal plane of the multi-element positive electrode material is greater than or equal to 0.5. The multi-element positive electrode material has a specific structure, thereby significantly improving the structural stability of the positive electrode material, alleviating the problem of oxygen evolution in a high delithiation state, reducing the degree of occurrence of a side reaction between the positive electrode material and an electrolyte under a high voltage, and improving the electrochemical performance and safety of a lithium ion battery.

## Description

### CROSS REFERENCE TO RELATED APPLICATIONS

This application claims the benefits of Chinese Patent Application 202111486692.1, filed on December 7, 2021, the contents of which are incorporated herein by reference; and Chinese Patent Application 202111599369.5, filed on December 24, 2021, the contents of which are incorporated herein by reference.

### FIELD OF THE INVENTION

The present disclosure relates to the field of lithium ion batteries, in particular to a multiple cathode material, and a preparation method therefor and a use thereof.

### BACKGROUND OF THE INVENTION

Due to the increasing demands of power markets on energy density and cycle life of lithium ion batteries in recent years, and the critical role of cathode materials on energy density and cycle life of lithium ion batteries, multiple cathode materials continue to receive attention from researchers and markets as research hotspots.

Increasing the energy density of cathodes of the lithium ion batteries is primarily achieved by increasing the gram specific capacity of an active material, and in general, increasing the gram specific capacity of the active material can be achieved by increasing a charge-discharge voltage window. However, increasing the charge-discharge voltage places more stringent requirements on the control of the structural stability and surface and interface reactivity of a cathode material, and if the cathode material fails to meet the requirements, blindly increasing the voltage window may lead to problems such as serious degradation in battery cycle performance and reduced safety. A main reason is that: (1) if the structural stability of the material is insufficient, lithium ions are more deintercalated from a layered structure of the cathode material at a higher charging voltage, causing partial collapse of the layered structure, lithium ions cannot be returned during discharge, and the capacity fades substantially; and (2) if the surface and interface reactivity of the material is high, the material and an electrolyte are likely to be subjected to a series of side reactions under a high voltage, resulting in severe gas production, insufficient contact of the active material with the electrolyte, and a sharp decline in capacity; simultaneous gas production also poses serious safety hazards.

By doping and coating the cathode material with specific elements and compounds, the structural stability of the material can be greatly improved, and the reactivity of the surface and interface of the material with the electrolyte can be reduced; and the stability of the layered structure and surface and interface of the material can be maintained even under the condition of relatively high degree of lithium ion deintercalation. However, at present, in the industry, doping and coating additives are introduced in the form of oxygenated compounds such as oxides, hydroxides or oxysalts of additive elements, eventually existing in the form of oxides or complex oxides with lithium oxide. Since an additive compound itself contains an oxygen element, it is difficult for the additive elements to re-bonded with oxygen in the structure and on the surface of the cathode material, and eventually to form stable and effective bonding with the structure and the surface of the cathode material, resulting in limited improvement effects on cycling performance of the cathode material, high voltage characteristics, and the like, and the remarkable effects of the additive elements cannot be fully exerted.

### SUMMARY OF THE INVENTION

The present disclosure aims to solve the problems existing in the prior art that the structural stability of oxygenated compound doped and/or coated cathode materials is poor and a side reaction between the cathode materials and an electrolyte in a high delithiation state is severe, which fails to meet application demands under a high voltage, and provides a multiple cathode material and a preparation method therefor and a use thereof. The multiple cathode material has a specific structure, thereby significantly improving the structural stability of the cathode material, alleviating the problem of oxygen evolution in a high delithiation state, reducing the degree of occurrence of a side reaction between the cathode material and the electrolyte under a high voltage, and improving the electrochemical performance and safety of a lithium ion battery.

In order to achieve the above object, in a first aspect, the present disclosure provides a multiple cathode material, wherein a ratio I₍₀₀₆₎/I₍₀₁₂₎, obtained by means of XRD, of the peak intensity I₍₀₀₆₎ of a (006) crystal plane to the peak intensity I₍₀₁₂₎ of a (012) crystal plane of the cathode material is greater than or equal to 0.8; and
a ratio A₍₀₀₆₎/A₍₀₁₂₎, obtained by means of XRD, of a peak area A₍₀₀₆₎ of the (006) crystal plane to a peak area A₍₀₁₂₎ of the (012) crystal plane of the cathode material is greater than or equal to 0.5.

In a second aspect, the present disclosure provides a method for preparing a multiple cathode material comprising:
(1) preparing a mixed salt solution of a nickel salt, a cobalt salt, and a manganese salt in a molar ratio of n(Ni):n(Co):n(Mn)=*x*:*y*:(1-*x*-*y*-*a*-*b*); and preparing a precipitating agent, a complexing agent, a dispersing agent, and optionally a first additive into a precipitating agent solution, a complexing agent solution, a dispersing agent solution, and optionally a first additive mixture, respectively;
(2) separately introducing the mixed salt solution, the precipitating agent solution, the complexing agent solution, the dispersing agent solution and optionally the first additive mixture simultaneously into a reactor for reaction and aging to obtain a solid-liquid mixture;
(3) filter pressing the solid-liquid mixture to obtain a filter cake, washing the filter cake, and drying to obtain a multiple cathode material precursor;
(4) mixing the multiple cathode material precursor, a lithium source and optionally a second additive to obtain a mixture I;
(5) subjecting the mixture I to roasting, cooling, crushing, and sieving to obtain a multiple cathode material process product;
(6) mixing the multiple cathode material process product with optionally a third additive to obtain a mixture II; and
(7) subjecting the mixture II to calcining, cooling, sieving, and demagnetizing to obtain the multiple cathode material;
wherein at least one of the first additive, the second additive, and the third additive is included.

In a third aspect, the present disclosure provides a multiple cathode material prepared by the preparation method described above.

In a fourth aspect, the present disclosure provides a use of the above multiple cathode material in a lithium ion battery.

Through the above technical solution, the multiple cathode material, the preparation method therefor and the use thereof provided by the present disclosure obtain the following beneficial effects:
the multiple cathode material provided by the present disclosure has a specific structure, the peak intensity ratio I₍₀₀₆₎/I₍₀₁₂₎ obtained by means of XRD is greater than or equal to 0.8, and the peak area ratio A₍₀₀₆₎/A₍₀₁₂₎ obtained by means of XRD is greater than or equal to 0.5. A crystal interphase (003) crystal plane diffraction peak corresponds to a (006) crystal plane peak. Compared with a multiple cathode materials having a peak intensity ratio I₍₀₀₆₎/l₍₀₁₂₎ of less than 0.8 and a peak area ratio A₍₀₀₆₎/A₍₀₁₂₎ of less than 0.5, the multiple cathode material having the specific structure in the present disclosure has a superior (003) crystal plane orientation, a M'-O bond length increases, the bond energy weakens, and the covalency decreases (M' is a framework transition metal element such as Ni, Co, Mn, etc. in the multiple cathode material), and the O element can remain stable over a wider range of variation of M' valency without generating electron holes in a 2p band, leading to oxygen evolution. Therefore, the structural stability of the multiple cathode material in the present disclosure is improved, and the problem of oxygen evolution in a high delithiation state can be alleviated, and the degree of occurrence of a side reaction between the cathode material and an electrolyte under a high voltage is reduced, and the electrochemical performance and safety of a lithium ion battery are improved.

Further, the present disclosure provides a preferred example of the multiple cathode material having the specific structure described above, the multiple cathode material includes a Q element and an M element therein, both being able to form effective bonding with an oxygen element inside and/or on the surface of the cathode material during roasting or calcination, thereby forming a specific structure in the multiple cathode material, the particular structure can significantly increase the stability of the cathode material and alleviate the problem of oxygen evolution in a high delithiation state, and at the same time, can substantially reduce the presence of unbonded dangling bonds on the surface and interface of the material and the number of oxygen active sites, and significantly reduce the degree of occurrence of a side reaction between the multiple cathode material and the electrolyte under a high voltage.

Further, by using the method for preparing the multiple cathode material provided by the present disclosure, the M element and/or the Q element can be introduced into the inner part and/or a coating layer of the cathode material, so that the stability of the structure as well as the surface and interface of the prepared cathode material is significantly improved, and in particular the preparation method enables the introduction of the M element and/or the Q element in different kinds of multiple materials, such as NCM111, NCM523, NCM622, NCM811, NCA, NCMA and the like. And the preparation process is simple and can be suitable for large-scale production.

Further, the multiple cathode material provided by the present disclosure has a high usage voltage window, and when the multiple cathode material is used in a lithium ion battery, the gram specific capacity, cycle life, direct current resistance (DCR) increase, and safety of the lithium ion battery can be significantly improved.

### BRIEF DESCRIPTION OF DRAWINGS

Fig. 1 is an XRD pattern of multiple cathode materials in Example 1 and Comparative example 1;
Fig. 2 is a graph of the cyclic capacity retention of batteries prepared from multiple cathode materials in Examples 1, 4, and 5, and Comparative example 1; and
Fig. 3 is a DCR graph of a cycling process of batteries prepared from the multiple cathode materials in Examples 1, 4, and 5, and Comparative example 1.

### DETAILED DESCRIPTION OF THE EMBODIMENTS

The endpoints and any values of the ranges disclosed herein are not limited to the precise range or value, and these ranges or values should be understood as including values close to these ranges or values. For numerical ranges, the endpoint values of each range, the endpoint values of each range and individual point values, and individual point values may be combined with each other to obtain one or more new numerical ranges, and these numerical ranges should be considered to be specifically disclosed herein.

In a first aspect, the present disclosure provides a multiple cathode material, wherein a ratio I₍₀₀₆₎/l₍₀₁₂₎, obtained by means of XRD, of the peak intensity I₍₀₀₆₎ of a (006) crystal plane to the peak intensity I₍₀₁₂₎ of a (012) crystal plane of the multiple cathode material is greater than or equal to 0.8; and
a ratio A₍₀₀₆₎/A₍₀₁₂₎, obtained by means of XRD, of a peak area A₍₀₀₆₎ of the (006) crystal plane to a peak area A₍₀₁₂₎ of the (012) crystal plane of the multiple cathode material is greater than or equal to 0.5.

The inventors have found through research that a framework transition metal element M' (Ni, Co, Mn, etc.) in a conventional multiple cathode material has strong covalency with an oxygen element, which can promote generation of electron holes in a 2p band of oxygen and lead to oxygen evolution in the multiple cathode material in a high delithiation state, resulting in the situation that the multiple cathode material is difficult to apply under a high voltage.

Whereas the inventors have found through research that by controlling the growth rate of a (003) crystal plane of the multiple cathode material, and/or controlling the growth rate of the (012) crystal plane, the growth rate of the (003) crystal plane is maintained to be significantly higher than the growth rate of the (012) crystal plane, so that the multiple cathode material has a specific structure in which the (003) crystal plane is preferentially grown, while a crystal interphase (003) crystal plane diffraction peak corresponds to a (006) crystal plane peak, and thus the multiple cathode material is embodied in that the ratio I₍₀₀₆₎/I₍₀₁₂₎, obtained by means of XRD, of the peak intensity I₍₀₀₆₎ of the (006) crystal plane to the peak intensity I₍₀₁₂₎ of the (012) crystal plane is greater than or equal to 0.8, and the ratio A₍₀₀₆₎/A₍₀₁₂₎, obtained by means of XRD, of the peak area A₍₀₀₆₎ of the (006) crystal plane to the peak area A₍₀₁₂₎ of the (012) plane crystal is greater than or equal to 0.5. Thus, the structural stability of the cathode material can be improved, the problem of oxygen evolution in a high delithiation state can be significantly alleviated, and the degree of occurrence of a side reaction between the cathode material and the electrolyte under a high voltage can be reduced, and the electrochemical performance of the lithium ion battery can be improved.

Further, I₍₀₀₆₎/I₍₀₁₂₎ is greater than or equal to 1; and A₍₀₀₆₎/A₍₀₁₂₎ is greater than or equal to 0.8.

In the present disclosure, the multiple cathode material has a (006) characteristic diffraction peak at 2θ of 37.2-39.5° and a (012) characteristic diffraction peak at 2θ of 37.2-39.5° obtained by means of XRD.

According to the present disclosure, the multiple cathode material has a composition represented by a general formula I:

Li*ₙ*Ni*ₓ*Co*_{y}*Mn_{1-*x*-*y*-*a*-*b*}M*ₐ*Q*_{b}*O₂ Formula I;

wherein 0.9≤*n*≤1.3, 0≤*x*<1, 0≤*y*<1, 0≤*a*≤0.04, 0<*b*≤0.05, and 0<*b*/*a*≤100;
M is at least one of W, Mo, V, Ca, Al, Si, Ni, Mn, Hf, Ta, Y, Sr, Ba, Er, Ga, Mg, Ti, Zr, La, Ce, Co and Nb; and
Q is at least one of B, P, and Si.

In the present disclosure, the inventors have found through research that the introduction of a boron element, a phosphorus element or a silicon element in the multiple cathode material is one of the embodiments described above to obtain the multiple cathode material having a peak intensity ratio I₍₀₀₆₎/I₍₀₁₂₎ of greater than or equal to 0.8 and a peak area ratio A₍₀₀₆₎/A₍₀₁₂₎ of greater than or equal to 0.5. Of course, those skilled in the art can also make the peak intensity ratio and the peak area ratio of the resulting multiple cathode material satisfy the above conditions in other ways, which is not limited in the present disclosure, but multiple cathode materials having a peak intensity ratio I₍₀₀₆₎/I₍₀₁₂₎ of greater than or equal to 0.8 and a peak area ratio A₍₀₀₆₎/A₍₀₁₂₎ of greater than or equal to 0.5 are within the scope of protection of the present disclosure.

In the present disclosure, the boron element, the phosphorus element or the silicon element is introduced to coat and/or dope the multiple cathode material, which can form effective bonding with the oxygen element inside and on the surface of the multiple cathode material, in particular, after bonding with the oxygen element inside, the original M'-O bond length is increased, the covalency of M' and the O element is diminished, the M'-M' interlayer spacing in the crystal structure is significantly increased, the (003) crystal plane exhibits a growth rate advantage, a crystal interphase (003) crystal plane diffraction peak corresponds to a (006) crystal plane peak, therefore, an XRD test shows that the crystal structure has a significant increase in both the ratio of the peak intensity I₍₀₀₆₎ of the (006) crystal plane to the peak intensity I₍₀₁₂₎ of the (012) crystal plane and the ratio A₍₀₀₆₎/A₍₀₁₂₎ of the peak area A₍₀₀₆₎ of the (006) crystal plane to the peak area A₍₀₁₂₎ of the (012) crystal plane, the change in the M' valence state during lithium deintercalation is large and the influence on the structure of electrons in the O-2p band is reduced, the stability of the multiple cathode material can be significantly increased and the problem of oxygen evolution in the high delithiation state can be alleviated; and after bonding with the oxygen element on the surface, the presence of unbonded dangling bonds on the surface and interface of the multiple cathode material and the number of oxygen active sites can be greatly reduced, and the degree of occurrence of a side reaction between the multiple cathode material and the electrolyte under a high voltage can be significantly reduced.

Further, a Q element doped and/or coated multiple cathode material having a peak intensity ratio I₍₀₀₆₎/I₍₀₁₂₎ of greater than or equal to 0.8 and a peak area ratio A₍₀₀₆₎/A₍₀₁₂₎ of greater than or equal to 0.5 is included in the present disclosure, so that not only can the structural stability and surface and interface stability of the multiple cathode material be effectively improved, but also the use range is very broad: multiple materials with different compositions such as NCM111, NCM523, NCM622, NCM811, NCA, and NCMA, and various lithium ion battery cathode materials such as LFP, and lithium-rich materials.

In one specific embodiment of the present disclosure, in the formula I, 0.9≤*n*≤1.3, 0≤*x*<1, 0≤*y*<1, 0≤*a*≤0.04, 0<*b*≤0.05, and 0<*b*/*a*≤100, and M is one or more of W, Mo, V, Ca, Al, Si, Ni, Mn, Hf, Ta, Y, Sr, Ba, Ga and Er.

Further, in the formula I, 1≤*n*≤1.2, 0≤*x*<1, 0≤*y*<1, 0<*a*≤0.03, 0<*b*≤0.04, and 0<*b*/*a*≤20;
M is at least one of W, Al, Si, Ta, Y, Sr, Ga, Mg, Ti, Zr, Co, and Nb;
Q is B; and
further preferably, 0<*b*/*a*≤5.

In the present disclosure, M is introduced in the form of one boron compound, phosphorus compound or silicon compound of M or in the form of a plurality of complex borides, complex phosphides or complex silicides of M.

According to the present disclosure, the multiple cathode material has a median particle size of 3-20 µm, preferably 4-17 µm.

According to the present disclosure, the multiple cathode material has an angle of repose of 35° or less, preferably 30° or less.

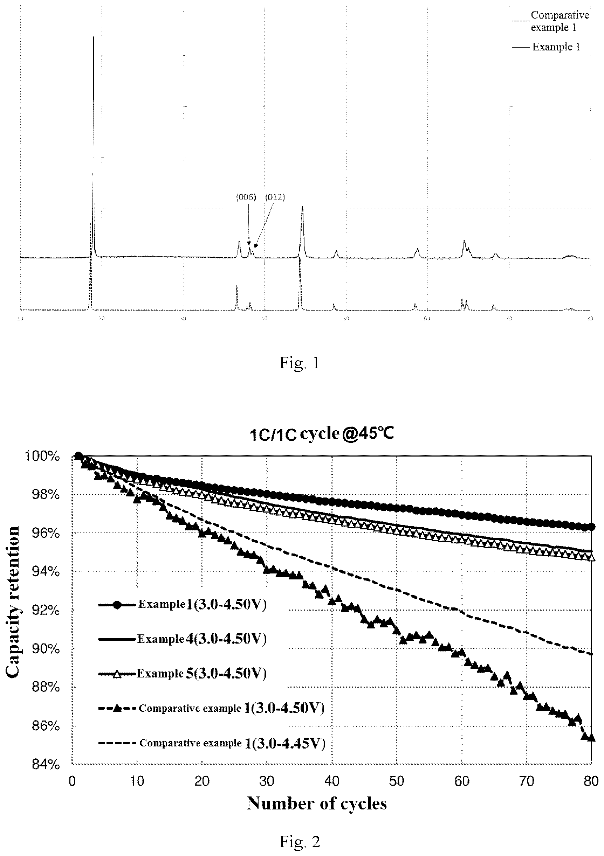

In the present disclosure, the cycle retention of the multiple cathode material of the present disclosure is improved by 5 percentage points or above relative to a multiple cathode material that does not contain a boron element, a phosphorus element, or a silicon element and has a peak intensity ratio I₍₀₀₆₎/I₍₀₁₂₎ of less than 0.8 and a peak area ratio A₍₀₀₆₎/A₍₀₁₂₎ of less than 0.5, see Fig. 2 for details.

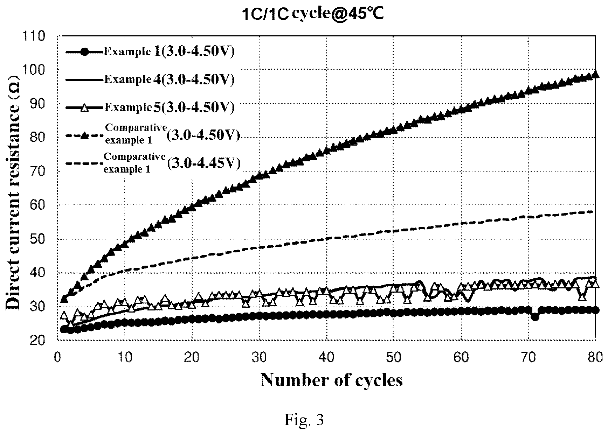

In the present disclosure, the DCR is reduced by 10 percentage points or more and the DCR increase is reduced by 5 percentage points or more after 80 cycles of the multiple cathode material of the present disclosure relative to the multiple cathode material that does not contain a boron element, a phosphorus element or a silicon element and has a peak intensity ratio I₍₀₀₆₎/l₍₀₁₂₎ of less than 0.8 and a peak area ratio A₍₀₀₆₎/A₍₀₁₂₎ of less than 0.5, see Fig. 3 for details.

According to the present disclosure, the content of LiOH is 1000-3000 ppm, preferably 1200-2500 ppm, based on the total weight of the multiple cathode material.

A method of preparing the above product includes a roasting process and a calcination process, wherein the roasting process is performed in an oxygen-deficient or oxygen-free atmosphere with the oxygen content of less than 20 vol% in a process of heating at 600°C or below, and in an air and/or oxygen atmosphere with the oxygen content of 20 vol% or more at 600°C or above.

In a second aspect, the present disclosure provides a method for preparing a multiple cathode material comprising:
(1) preparing a mixed salt solution of a nickel salt, a cobalt salt, and a manganese salt in a molar ratio of n(Ni):n(Co):n(Mn)=*x*:*y*:(1-*x*-*y*-*a*-*b*); and preparing a precipitating agent, a complexing agent, a dispersing agent, and optionally a first additive into a precipitating agent solution, a complexing agent solution, a dispersing agent solution, and optionally a first additive mixture, respectively;
(2) separately introducing the mixed salt solution, the precipitating agent solution, the complexing agent solution, the dispersing agent solution and optionally the first additive mixture simultaneously into a reactor for reaction and aging to obtain a solid-liquid mixture;
(3) filter pressing the solid-liquid mixture to obtain a filter cake, washing the filter cake, and drying to obtain a multiple cathode material precursor;
(4) mixing the multiple cathode material precursor, a lithium source and optionally a second additive to obtain a mixture I;
(5) subjecting the mixture I to roasting ,cooling, crushing, and sieving to obtain a multiple cathode material process product;
(6) mixing the multiple cathode material process product with optionally a third additive to obtain a mixture II; and
(7) subjecting the mixture II to calcining , cooling, sieving, and demagnetizing to obtain the multiple cathode material;
wherein at least one of the first additive, the second additive, and the third additive is included; and at least one of the first additive, the second additive, and the third additive is a Q-containing compound. In the present disclosure, the first additive mixture may be a first additive solution, a first additive sol, or a first additive suspension.

In the present disclosure, by using the preparation method described above, in particular, the Q-containing compound is added as the first additive, the second additive or the third additive at different stages of the preparation process of the multiple cathode material, thus the prepared multiple cathode material can have the specific structure in the present disclosure, so that the stability of the multiple cathode material can be significantly improved, the problem of oxygen evolution in the high delithiation state can be significantly alleviated, and the degree of occurrence of a side reaction between the multiple cathode material and the electrolyte under a high voltage can be reduced, and the electrochemical performance of a lithium ion battery can be improved.

Further, the multiple cathode material prepared by the above method has more excellent flowability, high sieving and demagnetizing efficiency, and excellent processability. Specifically, the multiple cathode material of the present disclosure has more excellent flowability and the angle of repose can be reduced by 3° or above relative to the multiple cathode material that does not contain a boron element, a phosphorus element, or a silicon element and has a peak intensity ratio I₍₀₀₆₎/l₍₀₁₂₎ of less than 0.8 and a peak area ratio A₍₀₀₆₎/A₍₀₁₂₎ of less than 0.5.

The multiple cathode material of the present disclosure is higher in sieving and demagnetizing efficiency and the production capacity can be improved by 20% or above relative to the multiple cathode material that does not contain a boron element, a phosphorus element, or a silicon element and has a peak intensity ratio I₍₀₀₆₎/I₍₀₁₂₎ of less than 0.8 and a peak area ratio A₍₀₀₆₎/A₍₀₁₂₎ of less than 0.5. According to the present disclosure, the ratio I₍₀₀₆₎/I₍₀₁₂₎, obtained by means of XRD, of the peak intensity I₍₀₀₆₎ of the (006) crystal plane to the peak intensity I₍₀₁₂₎ of the (012) crystal plane of the multiple cathode material is greater than or equal to 0.8, preferably I₍₀₀₆₎/l₍₀₁₂₎≥1; and
the ratio A₍₀₀₆₎/A₍₀₁₂₎, obtained by means of XRD, of the peak area A₍₀₀₆₎ of the (006) crystal plane to the peak area A₍₀₁₂₎ of the (012) crystal plane of the multiple cathode material is greater than or equal to 0.5, preferably A₍₀₀₆₎/A₍₀₁₂₎≥0.8.

According to the present disclosure, the multiple cathode material has a composition represented by a general formula I:

Li*ₙ*Ni*ₓ*Co*_{y}*Mn_{1-*x*-*y*-*a*-*b*}M*ₐ*Q*_{b}*O₂ Formula I;

wherein 0.9≤*n*≤1.3, 0≤*x*<1, 0≤*y*<1, 0≤*a*≤0.04, 0<*b*≤0.05, and 0<*b*/*a*≤100;
M is at least one of W, Mo, V, Ca, Al, Si, Ni, Mn, Hf, Ta, Y, Sr, Ba, Er, Ga, Mg, Ti, Zr, La, Ce, Co and Nb; and
Q is at least one of B, P and Si.

Further, in the formula I, 1≤*n*≤1.2, 0≤*x*<1, 0≤*y*<1, 0<*a*≤0.03, 0<*b*≤0.04, and 0<*b*/*a*≤20;
M is at least one of W, Al, Si, Ta, Y, Sr, Ga, Mg, Ti, Zr, Co and Nb;
Q is B; and
further preferably, 0<*b*/*a*≤5.

According to the present disclosure, the first additive, the second additive and the third additive are each independently selected from one or more of compounds capable of providing M and/or Q. Preferably, the compounds capable of providing M and/or Q are borides, phosphides or silicides containing an M element.

In the present disclosure, the inventors have found through research that compared with a multiple cathode materials having a peak intensity ratio I₍₀₀₆₎/l₍₀₁₂₎ of less than 0.8 and a peak area ratio A₍₀₀₆₎/A₍₀₁₂₎ of less than 0.5, the multiple cathode material having a peak intensity ratio I₍₀₀₆₎/I₍₀₁₂₎, obtained by means of XRD, of greater than or equal to 0.8 and a peak area ratio A₍₀₀₆₎/A₍₀₁₂₎, obtained by means of XRD, of greater than or equal to 0.5 has a superior (003) crystal plane orientation, a M'-O bond length increases, the bond energy weakens, and the covalency decreases, the O element can remain stable in a wider range of M' valency without generating electron holes in a 2p band, leading to oxygen evolution.

One of the preferred examples for obtaining the above-mentioned multiple cathode material with a specific peak intensity ratio, and peak area ratio is the introduction of the M element into the multiple cathode material in the form of a boron compound, a phosphorus compound or a silicon compound as a doping and/or coating additive, the boron compound, the phosphorus compound or the silicon compound containing the M element is bonded to oxygen inside and/or on the surface and interface of the multiple cathode material, a stable oxide (or a complex oxide formed together with lithium oxide) of the additive element M, boron oxide (or lithium borate or the like), phosphorus oxide (or lithium phosphate) or silicon oxide (or lithium silicate) is formed after reaction, and the oxygen element in the internal structure and on the surface and interface of the material can be effectively stabilized to achieve the purpose of improving the stability of the structure and surface and interface of the material.

In the present disclosure, the boron compound containing the M element is selected from at least one of the following compounds:

MgB₂, MgB₄, MgB₆, and MgB₁₂;

AIB₂, AIB₁₀, and AIB₁₂;

Si₁₁B₃₁, SiB₄, SiB₆, SiB₁₄, and SiB₁₈;

CaB₆;

TiB, Ti₃B₄, TiB₂, Ti₂B₅, TiB₁₂, TiB₂₅, TiB₅₅, and TiB₁₀₀;

V₃B₂, VB, V₅B₆, V₃B₄, V₂B₃, and VB₂;

Mn₂B, MnB, MnB₂, MnB₄, and MnB₁₂;

Co₄B, Co₂₃B₆, Co₃B, CozB, Co₁₃B₇, Co₃B₂, and CoB;

Ni₃B, Ni₂B, Ni₄B₃, NiB, and NiB₁₂;

SrB₆;

YB₂, YB₄, YB₆, YB₁₂, YB₂₅, YB₅₀, and YB₆₆;

ZrB₂, and ZrB₁₂;

Nb₃B₂, NbB, Nb₅B₆, and NbB₂;

Mo₂B, MoB, MoB₂, Mo₂B₅, Mo₄B₁₅, and MoB₄;

BaB₂, and BaB₆;

LaB₄, and LaB₆;

HfB, HfB₂, and HfB₁₂;

Ta₂B, Ta₃B₂, TaB, Ta₅B₆, Ta₃B₄, and TaB₂;

W₂B, WB, WB₂, W₂B₅, and WB₄;

CeB₄, and CeB₆; and

ErB₂, ErB₄, ErB₁₂, ErB₂₅, ErB₅₀, and ErB₆₆.

In the present disclosure, the phosphorus compound containing the M element is selected from at least one of the following compounds:

Mg₃P₂, and MgP₄;

Ca₃P₂, CaP, and CasPs;

Sr₃P₂, SrP, Sr₄P₅, Sr₃P₄, SrP₃, and Sr₃P₁₄;

Ba₃P₂, Ba₄P₅, Ba₃P₄, and BaP₁₀;

YP;

LaP, LaP₂, LaPs, and LaP₇;

Ti₅P₃, Ti₄P₃, Ti₁₇P₁₀, and TiP₂;

Zr₂P, Zr₅P₃, and ZrP;

Hf₃P₂, and HfP;

V₃P, V₂P, V₄P₃, VP, V₄P₇, VP₂, and VP₄;

Nb₅P₃, NbsPs, and NbP;

Ta₃P, and Ta₂P;

CeP, and CeP₂;

MosPs, Mo₄P₃, MoP, MoPz, and MoP₄;

WP, WP₂, and WP₄;

Mn₂P, MnP, MnP₂, and MnP₄;

Co₂P, CoP, CoPz, CoP₃, and CoP₄;

Ni₃P, Ni₅P₂, Ni₇P₃, Ni₂P, Ni₅P₄, NiP, NiP₂, and Ni₁₂P₅;

AlP;

GaP;

SiP, SiP₂, and Si₁₂P₅; and

B₁₃P, B₁₂P₂, and BP.

In the present disclosure, the silicon compound containing the M element is selected from at least one of the following compounds:

Mg₂Si;

Ca₂Si, CaSi, and CaSi₂;

Sr₂Si, SrSi, Sr₂Si₃, and SrSi₂;

Ba₂Si, Ba₅Si₃, BaSi, and BaSi₂;

Y₅Si₃, YSi, and YSi₂;

La₅Si₃, La₃Si₂, La₅Si₄, LaSi, and LaSi₂;

Ti₅Si₃, Ti₅Si₄, TiSi, and TiSi₂;

Zr₅Si₃, Zr₃Si₂, Zr₅Si₄, ZrSi, and ZrSi₂;

Hf₂Si, Hf₅Si₃, Hf₃Si₂, Hf₅Si₄, HfSi, and HfSi₂;

V₃Si, V₅Si₃, V₆Si₅, and VSi₂;

Nb₃Si, Nb₅Si₃, Nb₃Si₂, and NbSi₂;

Ta₃Si, Ta₅Si₂, Ta₂Si, and Ta₅Si₃;

Ce₅Si₃, CeSi, and CeSi₂;

MosSi, Mo₅Si₃, and MoSi₂;

W₅Si₃, and WSi₂;

Mn₆Si, Mn₅Si₂, MnSi, Mn₃Si₅, Mn₁₅Si₂₆, and Mn₂₇Si₄₇;

Co₂Si, CoSi, Co₂Si₃, and CoSi₂;

Ni₃Si, Ni₇₄Si₂₆, Ni₃₁Si₁₂, Ni₂Si, Ni₃Si₂, NiSi, and NiSi₂;

Al₄Si;

Er₅Si₃, ErSi, and ErSi₂; and

B₁₈Si, B₁₄Si, B₆Si, B₄Si, and B₃₁Si_{11.}

According to the present disclosure, the content of LiOH is 1000-3000 ppm, preferably 1200-2500 ppm, based on the weight of the multiple cathode material.

According to the present disclosure, the first additive is selected from one or more of soluble compounds capable of providing M and/or Q.

According to the present disclosure, the second additive and the third additive are each independently selected from one or more of compounds capable of providing M and Q.

Further, the second additive and the third additive are each independently compounds formed by W, Al, Si, Ta, Y, Sr, Mo, V, Mn, Ca, Ni, Hf, Ba, Er, or Ga, and B, P, or Si.

In the present disclosure, the nickel salt, the cobalt salt, and the manganese salt are selected from one or more of sulfates, chlorides, nitrates and acetates of nickel, cobalt, and manganese.

In the present disclosure, the precipitating agent is selected from one or more of sodium hydroxide, potassium hydroxide and lithium hydroxide.

In the present disclosure, the complexing agent is selected from one or more of ammonia water, disodium ethylenediamine tetraacetate, ammonium nitrate, ammonium chloride and ammonium sulfate.

In the present disclosure, the dispersing agent is selected from one or more of polyethylene glycol PEG, polyvinyl alcohol PVA, and polyglycerol.

In the present disclosure, the mixed salt solution, the precipitating agent solution, the complexing agent solution and the first additive are used in amounts such that n(Ni):n(Co):n(Mn):n(precipitating agent):n(complexing agent)=*x*:*y*:(1-*x*-*y*-*a*-*b*):1.2:0.3;
0≤n(M)/[n(Ni)+n(Co)+n(Mn)+n(M)+n(Q)]≤0.04; and
0≤n(Q)/[n(Ni)+n(Co)+n(Mn)+n(M)+n(Q)]≤0.05.

Further, the mixed salt solution, the precipitating agent solution, the complexing agent solution and the first additive are used in amounts such that n(Ni):n(Co):n(Mn):n(precipitating agent):n(complexing agent)=*x*:*y*:(1-*x*-*y*-*a*-*b*):1.1:0.2;
0.0001≤n(M)/[n(Ni)+n(Co)+n(Mn)+n(M)+n(Q)]≤0.03; and
0.0001≤n(Q)/[n(Ni)+n(Co)+n(Mn)+n(M)+n(Q)]≤0.04.

According to the present disclosure, the conditions for the reaction comprising: a reaction temperature of 40-80°C; and a pH of the reaction being controlled to be 10-13.

According to the present disclosure, the aging is performed for 2-8h.

In the present disclosure, in the step (3), the drying conditions comprising: a drying temperature of 100-130°C, and the drying time of 2-5h.

According to the present disclosure, the preparation method further includes subjecting a product obtained after the filter cake is washed, and dried to low-temperature heat treatment to obtain the precursor of the multiple cathode material precursor.

In the present disclosure, after the above-described low-temperature heat treatment, the roasting yield of the multiple cathode material and the production capacity of the roasting process can be further improved, specifically, the roasting yield can be increased by 10% or more.

According to the present disclosure, the conditions for the low-temperature heat treatment comprise: a treatment at a temperature of 300-700°C for 3-12h in the presence of air and/or oxygen.

Further, the conditions for the low-temperature heat treatment comprise: a treatment at a temperature of 400-600°C for 4-8h in the presence of air and/or oxygen.

According to the present disclosure, the multiple cathode material precursor, the lithium source and the second additive are used in amounts such that 0.9≤n(Li)/[n(Ni)+n(Co)+n(Mn)+n(M)+n(Q)]≤1.3;
0≤n(M)/[n(Ni)+n(Co)+n(Mn)+n(M)+n(Q)] <0.04; and
0≤n(Q)/[n(Ni)+n(Co)+n(Mn)+n(M)+n(Q)]≤0.05.

Preferably, the multiple cathode material precursor, the lithium source and the second additive are used in amounts such that 1≤n(Li)/[n(Ni)+n(Co)+n(Mn)+n(M)+n(Q)]≤1.2;
0<n(M)/[n(Ni)+n(Co)+n(Mn)+n(M)+n(Q)]≤0.03; and
0<n(Q)/[n(Ni)+n(Co)+n(Mn)+n(M)+n(Q)]≤0.04.

In the present disclosure, the lithium source is selected from one or more of lithium carbonate, lithium chloride, lithium hydroxide, lithium fluoride and lithium nitrate.

According to the present disclosure, the roasting conditions comprise: a roasting temperature of 600-1100°C, and a roasting time of 4-18h.

Further, the roasting process is performed in an oxygen-deficient or oxygen-free atmosphere with the oxygen content of less than 20 vol% in a stage of heating at 600°C or below, and the roasting process (heating, constant temperature, and cooling stages) is performed in an air and/or oxygen atmosphere with the oxygen content of 20 vol% or more at 600°C or above.

Further, the roasting conditions comprise: a roasting temperature of 700-1000°C, and a roasting time of 6-15h.

According to the present disclosure, the multiple cathode material process product and the third additive are used in amounts such that 0≤n(M)/[n(Ni)+n(Co)+n(Mn)+n(M)+n(Q)]≤0.04; and
0≤n(Q)/[n(Ni)+n(Co)+n(Mn)+n(M)+n(Q)]≤0.05.

Preferably, the multiple cathode material process product and the third additive are used in amounts such that 0<n(M)/[n(Ni)+n(Co)+n(Mn)+n(M)+n(Q)]≤0.03; and
0<n(Q)/[n(Ni)+n(Co)+n(Mn)+n(M)+n(Q)]≤0.04.

According to the present disclosure, the calcination conditions comprise: a calcination temperature of 300-1000°C, and a calcination time of 4-12h.

Further, the calcination conditions comprise: a calcination temperature of 400-900°C, and a calcination time of 6-10h.

In a third aspect, the present disclosure provides a multiple cathode material prepared by the preparation method described above.

In a fourth aspect, the present disclosure provides a use of a multiple cathode material in a lithium ion battery.

Hereinafter, the present disclosure will be described in detail by examples. In the following examples, XRD parameters were measured by an X-ray diffractometer method using an X-ray diffractometer (Rigaku, Smart Lab 9KW) using an X-ray source of Cu Kα with a scan range of 10°-80°, a scan rate of 2°/min, and a scan step of 0.02°;
a particle size was measured by using a laser light scattering method using a laser particle size analyzer (Malvern, Mastersizer 2000) at a rotational speed of 2850 rpm, and an obscuration of 10-20%;
an angle of repose of a material was tested by poured angle of restrictive pile using an angle of repose tester XF-4324 at 25±3°C and at a discharge rate of 30 g/min;
the content of each element in the multiple cathode material was tested by using an ICP method using PE Optima 7000DV, and the test conditions were as follows: 0.1 g of a sample was completely dissolved in a mixed acid solution of 3 mL HNO₃+9 mL HCl, followed by being diluted to 250 mL for testing;
the LiOH content parameter of the multiple cathode material was measured by a potentiometric titration method using a Metrohm 848 potentiometric titrator at 25°C;
the sieving and demagnetizing capacity was statistically calculated by using the weight of a material produced per unit time of the sieving and demagnetizing process;
the roasting yield was calculated by weighing the mass of the sample before and after roasting; and
the first discharge capacity and the cycling performance of the multiple cathode material were measured by a button cell method using the New Wiley Battery Test Cabinet (CT3008), the first charge-discharge capacity test conditions were as follows: 0.2C@3-4.35V or 0.2C@3-4.40V or 0.2C@3.0-4.45V at 25°C, the greater the discharge capacity, the higher the specific capacity of the material, the higher the energy density of a battery system; the cycling performance test conditions were as follows: 1.0C@3-4.45V or 1.0C@3-4.50V at 45°C, the smaller the capacity fade during cycling, the higher the stability of the material, the better the cycling performance of the battery system. A button cell was manufactured according to the following steps:
   9.2g of a cathode material, 0.4g of acetylene black, and 0.4g of polyvinylidene fluoride (PVDF) were mixed, an aluminum foil was coated with the obtained mixture, drying was performed, and press forming was performed with a pressure of 100 MPa to obtain a positive electrode having a diameter of 12 mm and a thickness of 120 µm, and then the positive electrode was put into a vacuum drying oven for drying at 120°C for 12h.

A negative electrode adopted a Li metal sheet having a diameter of 17 mm and a thickness of 1 mm; a separator adopted a polyethylene porous membrane having a thickness of 25 µm; and an electrolyte solution adopted a mixed solution of ethylene carbonate (EC) and diethyl carbonate (DEC) equal amounts with 1 mol/L LiPF₆ as an electrolyte.

The positive electrode, the separator, a negative electrode, and the electrolyte solution were assembled into a 2025 type button cell inside an Ar gas glove box with both the water content and the oxygen content of less than 5 ppm.

A test procedure for the cycling performance of the multiple cathode material was as follows:
the button cell was activated by constant-current constant-voltage charge-discharge cycles in the range of 3-4.4 V. A charge-discharge system was as follows: constant-current constant-voltage charging to 4.4 V at a rate of 0.2C, with a constant-voltage charging cutoff current being 0.02 C, and constant-current discharging to 3V at a rate of 0.2C. Charging and discharging in this system were performed for 2 cycles and the cell served as an activated cell.

A charge-discharge cycling test was conducted by using the activated cell at a current density of 1C in a voltage interval of 3-4.45 V or 3-4.5 V at a temperature of 45°C for 80 cycles to investigate the cycle retention and the DCR increase of the multiple cathode material.

Raw materials used in the examples as well as the comparative examples were commercially available.

### Example 1

S1. A 2 mol/L mixed solution of sulfates of nickel, cobalt and manganese (a molar ratio of Ni:Co:Mn=50:19:28.6), a 2.5 mol/L NaOH solution, 3 mol/L ammonia water, a 20 g/L PEG1000 dispersing agent aqueous solution, and a 1 mol/L Al₂(SO₄)₃ solution were prepared, the solutions were introduced into a reactor in a parallel flow, wherein Al₂(SO₄)₃ was introduced in an amount of [n(Ni)+n(Co)+n(Mn)]:n(Al) = 0.976:0.003, and a reaction was carried out at a reaction temperature maintained at 60°C and a reaction pH maintained at 12.0. After the reaction was completed, aging was performed for 6h, then subjected to filter pressing, washing, drying at 110°C, sieving, and heat treatment was continued to be performed in an air atmosphere at 500°C for 8h to obtain a multiple cathode material precursor.

S2. The multiple cathode material precursor, lithium carbonate and yttrium diboride (YBz) were thoroughly mixed in a high-speed mixer in a ratio of [n(Ni)+n(Co)+n(Mn)]:n(Li):n(Y)=0.976:1.05:0.002, and the obtained mixture was roasted at 1000°C for 12h, wherein the roasting process was performed in a mixed atmosphere of nitrogen and air with the oxygen content of 15 vol% in a process of heating at 600°C or below, and switched to be performed in a dry air atmosphere with the oxygen content of 21 vol% at 600°C or above, and natural cooling, crushing, and sieving to obtain a multiple cathode material process product I.

S3. The a multiple cathode material process product I, and dicobalt boride (CozB) were thoroughly mixed in a high-speed mixer in a ratio of [n(Ni)+n(Co)+n(Mn)]:n(Co)=0.976:0.010, the obtained mixture was calcined at 800°C for 8h in a dry air atmosphere, natural cooling, and sieving by a 400-mesh sieve to obtain a multiple cathode material A1 with a composition of Li_{1.05}Ni_{0.5}Co_{0.2}Mn_{0.286}Al_{0.003}Y_{0.002}B_{0.009}O₂.

Wherein the roasting yield and the sieving and demagnetizing capacity of the multiple cathode material A1 are shown in Table 1.

The composition, particle size D₅₀, LiOH content, angle of repose, I₍₀₀₆₎/I₍₀₁₂₎, and A₍₀₀₆₎/A₍₀₁₂₎ of this cathode material A1 are shown in Table 2. The XRD results for this cathode material A1 are detailed in Fig. 1. The gram specific capacity under a voltage of 4.45 V, as well as the cycle retention and DCR increase in a voltage interval of 3-4.5 V of a button cell prepared from this cathode material A1 are shown in Table 3. The cycle retention and DCR results of the button cell prepared from this cathode material A1 are detailed in Figs. 2 and 3, respectively.

### Example 2

S1. A 1.5 mol/L mixed solution of sulfates of nickel, cobalt and manganese (a molar ratio of Ni:Co:Mn=50:18:24), a 3 mol/L NaOH solution, 2 mol/L ammonia water, a 15 g/L PEG1000 dispersing agent aqueous solution, and a 0.5 mol/L Al₂(SO₄)₃ solution were prepared, the solutions were introduced into a reactor in a parallel flow, wherein Al₂(SO₄)₃ was introduced in an amount of [n(Ni)+n(Co)+n(Mn)]:n(Al) = 0.92:0.01, and a reaction was carried out at a reaction temperature maintained at 50°C and a reaction pH maintained at 11. After the reaction was completed, aging was performed for 12h, then subjected to filter pressing, washing, drying at 110°C, sieving, and heat treatment was continued to be performed in an air atmosphere at 400°C for 10h to obtain a multi-element cathode material precursor.

S2. The a multiple cathode material precursor, lithium carbonate, and yttrium diboride (YBz) were thoroughly mixed in a high-speed mixer in a ratio of [n(Ni)+n(Co)+n(Mn)]:n(Li):n(Y)=0.92:1.20:0.01, and the obtained mixture was roasted at 900°C for 18h, wherein the roasting process was performed in a mixed atmosphere of nitrogen and air with the oxygen content of 10 vol% in a process of heating at 600°C or below, and switched to be performed in a dry air atmosphere with the oxygen content of 21 vol% at 600°C or above, and natural cooling, crushing, and sieving to obtain a multiple cathode material process product I .

S3. The multiple cathode material process product I and cobalt boride (CoB) were thoroughly mixed in a high-speed mixer in a ratio of [n(Ni)+n(Co)+n(Mn)]:n(Co)=0.92:0.02, the obtained mixture was calcined at 400°C for 10h in a dry air atmosphere, natural cooling, and sieving by a 400-mesh sieve to obtain a multiple cathode material A2 with a composition of Li_{1.20}Ni_{0.5}Co_{0.2}Mn_{0.24}Al_{0.01}Y_{0.01}B_{0.04}O₂. Wherein the roasting yield and the sieving and demagnetizing capacity of the multiple cathode material A2 are shown in Table 1.

The composition, particle size D₅₀, LiOH content, angle of repose, I₍₀₀₆₎/I₍₀₁₂₎, and A₍₀₀₆₎/A₍₀₁₂₎ of this cathode material A2 are shown in Table 2. The gram specific capacity under a voltage of 4.45 V, as well as the cycle retention and DCR increase in a voltage interval of 3-4.5 V of a button cell prepared from this cathode material A2 are shown in Table 3.

### Example 3

S1. A 2.5 mol/L mixed solution of sulfates of nickel, cobalt and manganese (a molar ratio of Ni:Co:Mn=50:19.9:29.5), a 10 mol/L NaOH solution, 8 mol/L ammonia water, a 100 g/L PEG1000 dispersing agent aqueous solution, and a 0.2 mol/L Al₂(SO₄)₃ solution were prepared, the solutions were introduced into a reactor in a parallel flow, wherein Al₂(SO₄)₃ was introduced in an amount of [n(Ni)+n(Co)+n(Mn)]:n(Al) = 0.994:0.001, and a reaction was carried out at a reaction temperature maintained at 70°C and a reaction pH maintained at 13. After the reaction was completed, aging was performed for 2h, then subjected to filter pressing, washing, drying at 120°C, sieving, and heat treatment was continued to be performed in an air atmosphere at 600°C for 3h to obtain a multiple cathode material precursor.

S2. The multiple cathode material precursor, lithium carbonate, and yttrium diboride (YBz) were thoroughly mixed in a high-speed mixer in a ratio of [n(Ni)+n(Co)+n(Mn)]:n(Li):n(Y)=0.994: 1.0:0.001, and the obtained mixture was roasted at 950°C for 4h, wherein the roasting process was performed in a mixed atmosphere of nitrogen and air with the oxygen content of 5 vol% in a process of heating at 600°C or below, and switched to be performed in a dry air atmosphere with the oxygen content of 21 vol% at 600°C or above, and natural cooling, crushing, and sieving to obtain a multiple cathode material process product I.

S3. The multiple cathode material process product I and cobalt boride (CoB) were thoroughly mixed in a high-speed mixer in a ratio of [n(Ni)+n(Co)+n(Mn)]:n(Co)=0.994:0.001, the obtained mixture was calcined at 900°C for 6h in a dry air atmosphere, natural cooling, and sieving by a 400-mesh sieve to obtain a multiple cathode material A3 with a composition of LiNi_{0.5}Co_{0.2}Mn_{0.295}Al_{0.001}Y_{0.001}B_{0.003}O₂. Wherein the roasting yield and the sieving and demagnetizing capacity of the multiple cathode material A3 are shown in Table 1.

The composition, particle size D₅₀, LiOH content, angle of repose, I₍₀₀₆₎/I₍₀₁₂₎, and A₍₀₀₆₎/A₍₀₁₂₎ of this cathode material A3 are shown in Table 2. The gram specific capacity under a voltage of 4.45 V, as well as the cycle retention and DCR increase in a voltage interval of 3-4.5 V of a button cell prepared from this cathode material A3 are shown in Table 3.

### Example 4

A multiple cathode material A4 was prepared according to the method in Example 1, except that:
in the step S1, after the reaction was completed, aging was performed for 6h, and then filter pressing was performed, washing was performed, drying was performed at 110°C and sieving was performed without heat treatment at 500°C in an air atmosphere;
in the step S2, yttrium diboride (YB₂) was replaced with Y₂O₃ and B₂O₃, and n(Y₂O₃):n(B₂O₃)=1:2, wherein the Y element was added in the same amount as that in Example 1; and
in the step S3, dicobalt boride (Co₂B) was replaced with Co(OH)₂ and H₃BO₃, and n(Co(OH)₂):n(H₃BO₃)=2:1, wherein the Co element was added in the same amount as that in Example 1.

A multiple cathode material A4 was prepared, having a composition of Li_{1.05}Ni_{0.5}Co_{0.2}Mn_{0.286}Al_{0.003}Y_{0.002}B_{0.009}O₂, which was the same as the composition of the cathode material A1. The cycle retention and DCR results for this cathode material A4 are detailed in Figs. 2 and 3, respectively.

Wherein the roasting yield and the sieving and demagnetizing capacity of the cathode material A4 are shown in Table 1.

The composition, particle size D₅₀, LiOH content, angle of repose, I₍₀₀₆₎/I₍₀₁₂₎, and A₍₀₀₆₎/A₍₀₁₂₎ of this cathode material A4 are shown in Table 2. The gram specific capacity under a voltage of 4.45 V, as well as the cycle retention and DCR increase in a voltage interval of 3-4.5 V of a button cell prepared from this cathode material A4 are shown in Table 3.

### Example 5

A multiple cathode material A5 was prepared according to the method in Example 1, except that:
in the step S1, after the reaction was completed, aging was performed for 6h, and then filter pressing was performed, washing was performed, drying was performed at 110°C and sieving was performed without heat treatment at 500°C in an air atmosphere;
in the step S2, yttrium diboride (YB₂) was not added; and
in the step S3, dicobalt boride (Co₂B) was replaced with Y₂O₃, Co(OH)₂ and H₃BO₃, and n(Y₂O₃):n(Co(OH)₂):n(H₃BO₃)=1:10:9, wherein the Co element was added in the same amount as that in Example 1.

A multiple cathode material A5 was prepared, having a composition of Li_{1.05}Ni_{0.5}Co_{0.2}Mn_{0.286}Al_{0.003}Y_{0.002}B_{0.009}O₂, which was the same as the composition of the cathode material A1. The cycle retention and DCR results for this cathode material A5 are detailed in Figs. 2 and 3, respectively.

Wherein the roasting yield and the sieving and demagnetizing capacity of the multiple cathode material A5 are shown in Table 1.

The composition, particle size D₅₀, LiOH content, angle of repose, I₍₀₀₆₎/I₍₀₁₂₎, and A₍₀₀₆₎/A₍₀₁₂₎ of this cathode material A5 are shown in Table 2. The gram specific capacity under a voltage of 4.45 V, as well as the cycle retention and DCR increase in a voltage interval of 3-4.5 V of a button cell prepared from this cathode material A5 are shown in Table 3.

### Example 6

S1. A 2 mol/L mixed solution of sulfates of nickel, cobalt and manganese (a molar ratio of Ni:Co:Mn=65:15:19), a 2.5 mol/L NaOH solution, 3 mol/L ammonia water, and a 20 g/L PEG1000 dispersing agent aqueous solution were prepared, the solutions were introduced into a reactor in a parallel flow, and a reaction was carried out at a reaction temperature maintained at 65°C and a reaction pH maintained at 11.5. After the reaction was completed, aging was performed for 6h, then subjected to filter pressing, washing, drying at 110°C, sieving, and heat treatment was continued to be performed in an air atmosphere at 500°C for 5h to obtain a multiple cathode material precursor.

S2. The multiple cathode material precursor, lithium hydroxide, and strontium hexaboride (SrB₆) were thoroughly mixed in a high-speed mixer in a ratio of [n(Ni)+n(Co)+n(Mn)]:n(Li):n(Sr)=0.99:1.03:0.001, and the obtained mixture was roasted at 920°C for 12h, wherein the roasting process was performed in a nitrogen atmosphere with the oxygen content of 0 vol% in a process of heating at 600°C or below, and switched to be performed in a dry air atmosphere with the oxygen content of 21 vol% at 600°C or above, and natural cooling, crushing, and sieving to obtain a multiple cathode material process product I.

S3. The multiple cathode material process product I and ditungsten boride (W₂B) were thoroughly mixed in a high-speed mixer in a ratio of [n(Ni)+n(Co)+n(Mn)]:n(W)=0.99:0.002, the obtained mixture was calcined at 700°C for 10h in a dry air atmosphere, natural cooling, and sieving by a 400-mesh sieve to obtain a multiple cathode material A6 with a composition of Li_{1.03}Ni_{0.65}Co_{0.15}Mn_{0.19}Sr_{0.001}W_{0.002}B_{0.007}O₂.

Wherein the roasting yield and the sieving and demagnetizing capacity of the cathode material A6 are shown in Table 1.

The composition, particle size D₅₀, LiOH content, angle of repose, I₍₀₀₆₎/I₍₀₁₂₎, and A₍₀₀₆₎/A₍₀₁₂₎ of this cathode material A6 are shown in Table 2. The gram specific capacity under a voltage of 4.40 V, as well as the cycle retention and DCR increase in a voltage interval of 3-4.45 V of a button cell prepared from this cathode material A6 are shown in Table 3.

### Example 7

S1. A 2 mol/L mixed solution of sulfates of nickel, cobalt and manganese (a molar ratio of Ni:Co:Mn=80:10:9.1), a 2.5 mol/L NaOH solution, 3 mol/L ammonia water, and a 20 g/L PEG1000 dispersing agent aqueous solution were prepared, the solutions were introduced into a reactor in a parallel flow, and a reaction was carried out at a reaction temperature maintained at 55°C and a reaction pH maintained at 12.0. After the reaction was completed, aging was performed for 6h, then subjected to filter pressing, washing, drying at 110°C, sieving, and heat treatment was continued to be performed in an air atmosphere at 500°C for 6h to obtain a multiple cathode material precursor.

S2. The multiple cathode material precursor, lithium hydroxide, and barium diboride (BaB₂) were thoroughly mixed in a high-speed mixer in a ratio of [n(Ni)+n(Co)+n(Mn)]:n(Li):n(Ba)=0.991:1.08:0.001, and the obtained mixture was roasted at 810°C for 10h, wherein the roasting process was performed in a mixed atmosphere of nitrogen and air with the oxygen content of 15 vol% in a process of heating at 600°C or below, and switched to be performed in a dry oxygen atmosphere with the oxygen content of 100 vol% at 600°C or above, and natural cooling, crushing, and sieving to obtain a multiple cathode material process product I.

S3. The multiple cathode material process product I and zirconium diboride (ZrB₂) were thoroughly mixed in a high-speed mixer in a ratio of [n(Ni)+n(Co)+n(Mn)]:n(Zr)=0.991:0.002, the obtained mixture was calcined at 600°C for 8h in a dry air atmosphere, natural cooling, and sieving by a 400-mesh sieve to obtain a multiple cathode material A7 with a composition of Li_{1.08}Ni_{0.8}Co_{0.1}Mn_{0.091}Ba_{0.001}Zr_{0.002}B_{0.006}O₂.

Wherein the roasting yield and the sieving and demagnetizing capacity of the multiple cathode material A7 are shown in Table 1.

The composition, particle size D₅₀, LiOH content, angle of repose, I₍₀₀₆₎/I₍₀₁₂₎, and A₍₀₀₆₎/A₍₀₁₂₎ of this cathode material A7 are shown in Table 2. The gram specific capacity under a voltage of 4.40 V, as well as the cycle retention and DCR increase in a voltage interval of 3-4.45 V of a button cell prepared from this cathode material A7 are shown in Table 3.

### Example 8

A multiple cathode material A8 was prepared according to the method in Example 7, except that:
in the step S1, for reactants for the first reaction, in addition to the mixed solution of sulfates of nickel, cobalt and manganese, the NaOH solution, the ammonia water, and the PEG1000 dispersing agent solution, a 0.1 mol/L acidic solution of barium metaborate (Ba(BOz)z) was simultaneously introduced into the reactor in a parallel flow, where [n(Ni)+n(Co)+n(Mn)]:n(Ba)=0.991:0.001;
in the step S1, after the first reaction was completed, filter pressing was performed, washing was performed, drying was performed at 110°C, and sieving was performed without low temperature heat treatment at 500°C in an air atmosphere;
in the step S2, barium diboride (BaB₂) was not added; and
in the step S3, zirconium diboride (ZrB₂) was replaced with ZrOz and B₂O₃, and n(Zr):n(B)=1:2, wherein the Zr element was added in the same amount as that in Example 7.

A multiple cathode material A8 was prepared, having a composition of Li_{1.08}Ni_{0.8}Co_{0.1}Mn_{0.091}Ba_{0.001}Zr_{0.002}B_{0.006}O₂, which was the same as the composition of the multiple cathode material A7.

Wherein the roasting yield and the sieving and demagnetizing capacity of the multiple cathode material A8 are shown in Table 1.

The composition, particle size D₅₀, LiOH content, angle of repose, I₍₀₀₆₎/I₍₀₁₂₎, and A₍₀₀₆₎/A₍₀₁₂₎ of this cathode material A8 are shown in Table 2. The gram specific capacity under a voltage of 4.40 V, as well as the cycle retention and DCR increase in a voltage interval of 3-4.45 V of a button cell prepared from this cathode material A8 are shown in Table 3.

### Example 9

A multiple cathode material A9 was prepared according to the method in Example 7, except that:
in the step S1, the molar ratio of nickel to cobalt to manganese in the mixed sulfate solution was Ni:Co:Mn=80:10:9.5;
in the step S1, after the first reaction was completed, filter pressing was performed, washing was performed, drying was performed at 110°C, and sieving was performed without low temperature heat treatment at 500°C in an air atmosphere; and
in the step S3, a third additive used zirconium dioxide (ZrOz) instead of zirconium diboride (ZrB₂) and the Zr element was added in the same amount as that in Example 7.

A multiple cathode material A9 was prepared, having a composition of Li _{1.08}Ni_{0.8}Co_{0.1}Mn_{0.095}Ba_{0.001}Zr_{0.002}B_{0.002}O₂.

Wherein the roasting yield and the sieving and demagnetizing capacity of the multiple cathode material A9 are shown in Table 1.

The composition, particle size D₅₀, LiOH content, angle of repose, I₍₀₀₆₎/I₍₀₁₂₎, and A₍₀₀₆₎/A₍₀₁₂₎ of this cathode material A9 are shown in Table 2. The gram specific capacity under a voltage of 4.40 V, as well as the cycle retention and DCR increase in a voltage interval of 3-4.45 V of a button cell prepared from this cathode material A9 are shown in Table 3.

### Example 10

A multiple cathode material A10 was prepared according to the method in Example 7, except that:
in the step S1, the molar ratio of nickel to cobalt to manganese in the mixed sulfate solution was Ni:Co:Mn=80:9:9.2;
in the step S1, after the first reaction was completed, filter pressing was performed, washing was performed, drying was performed at 110°C, and sieving was performed without low temperature heat treatment at 500°C in an air atmosphere;
in the step S2, a second additive used titanium diboride (TiB₂) instead of barium diboride (BaB₂), and [n(Ni)+n(Co)+n(Mn)]:n(Li):n(Ti)=0.982:1.03:0.001; and
in the step S3, a third additive used dicobalt boride (Co₂B) instead of zirconium diboride (ZrB₂), and [n(Ni)+n(Co)+n(Mn)]:n(B)=0.982:0.005.

A multiple cathode material A10 was prepared, having a composition of Li_{1.03}Ni_{0.8}Co_{0.1}Mn_{0.092}Ti_{0.001}B_{0.007}O₂.

Wherein the roasting yield and the sieving and demagnetizing capacity of the multiple cathode material A10 are shown in Table 1.

The composition, particle size D₅₀, LiOH content, angle of repose, I₍₀₀₆₎/I₍₀₁₂₎, and A₍₀₀₆₎/A₍₀₁₂₎ of this cathode material A10 are shown in Table 2. The gram specific capacity under a voltage of 4.40 V, as well as the cycle retention and DCR increase in a voltage interval of 3-4.45 V of a button cell prepared from this cathode material A10 are shown in Table 3.

### Example 11

51. A 2 mol/L mixed solution of sulfates of nickel, cobalt and manganese (a molar ratio of Ni:Co:Mn=15:14:70), a 2.5 mol/L NaOR solution, 3 mol/L ammonia water, and a 20 gAL PEG1000 dispersing agent aqueous solution were prepared, the solutions were introduced into a reactor in a parallel flow, and a reaction was carried out at a reaction temperature maintained at 65°C and a reaction pH maintained at 11.5. After the reaction was completed, aging was performed for 6h, then subjected to filter pressing, washing, drying at 110°C, sieving, and heat treatment was continued to be performed in an air atmosphere at 500°C for 5h to obtain a multiple cathode material precursor.

S2. The multiple cathode material precursor, lithium hydroxide, and strontium hexaboride (SrB6) were thoroughly mixed in a high-speed mixer in a ratio of [n(Ni)+n(Co)+n(Mn)]:n(Li):n(Sr)=0.99:1.23:0.001, and the obtained mixture was roasted at 900°C for 12h, wherein the roasting process was performed in a mixed atmosphere of nitrogen and air with the oxygen content of 15 vol% in a process of heating at 600°C or below, and switched to be performed in a dry air atmosphere with the oxygen content of 21 vol% at 600°C or above, and natural cooling, crushing, and sieving to obtain a multiple cathode material process product I.

S3. The multiple cathode material process product 1 and ditungsten boride (W₂B) were thoroughly mixed in a high-speed mixer in a ratio of [n(Ni)+n(Co)+n(Mn)]:n(W)=0.99:0.002, the obtained mixture was calcined at 600°C for 10h in a dry air atmosphere, natural cooling, and sieving by a 400-mesh sieve to obtain a multiple cathode material A11 with a composition of Li_{1.23}Ni_{0.15}Co_{0.14}Mn_{0.70}Sr_{0.001}W_{0.002}B_{0.007}O₂.

Wherein the roasting yield and the sieving and demagnetizing capacity of the multiple cathode material A11 are shown in Table 1.

The composition, particle size D₅₀, LiOH content, angle of repose, I₍₀₀₆₎/I₍₀₁₂₎, and A₍₀₀₆₎/A₍₀₁₂₎ of this cathode material A11 are shown in Table 2. The gram specific capacity under a voltage of 4.60 V, as well as the cycle retention and DCR increase in a voltage interval of 3-4.5 V of a button cell prepared from this cathode material A11 are shown in Table 3.

### Example 12

A multiple cathode material A12 was prepared according to the method in Example 7, except that:
in the step S1, the molar ratio of nickel to cobalt to manganese in the mixed sulfate solution was Ni:Co:Mn=80:9:9.6;
in the step S1, after the first reaction was completed, filter pressing was performed, washing was performed, drying was performed at 110°C, and sieving was performed without low temperature heat treatment at 500°C in an air atmosphere;
in the step S2, barium diboride (BaB₂) was not added; and
in the step S3, a third additive used cobaltous hydroxide (Co(OH)₂) and gallium phosphide (GaP) instead of zirconium diboride (ZrB₂), and [n(Ni)+n(Co)+n(Mn)]:n(Co(OH)₂):n(Gap)=0.986:0.01:0.002

A multiple cathode material A12 was prepared, having a composition of Li_{1.08}Ni_{0.8}Co_{0.1}Mn_{0.096}Ga_{0.002}P_{0.002}O₂.

Wherein the roasting yield and the sieving and demagnetizing capacity of the multiple cathode material A12 are shown in Table 1.

The composition, particle size D₅₀, LiOH content, angle of repose, I₍₀₀₆₎/I₍₀₁₂₎, and A₍₀₀₆₎/A₍₀₁₂₎ of this cathode material A12 are shown in Table 2. The gram specific capacity under a voltage of 4.40 V, as well as the cycle retention and DCR increase in a voltage interval of 3-4.45 V of a button cell prepared from this cathode material A12 are shown in Table 3.

### Example 13

A multiple cathode material A13 was prepared according to the method in Example 7, except that:
in the step S1, after the first reaction was completed, filter pressing was performed, washing was performed, drying was performed at 110°C, and sieving was performed without low temperature heat treatment at 500°C in an air atmosphere; and
in the step S3, a third additive used zirconium disilicide (ZrSi₂) instead of zirconium diboride (ZrB₂), and [n(Ni)+n(Co)+n(Mn)]:n(Zr)=0.991:0.002.

A multiple cathode material A13 was prepared, having a composition of Li_{l1.08}Ni_{0.8}Co_{0.1}Mn_{0.096}Ba_{0.001}Zr_{0.002}B_{0.002}Si_{0.004}O₂.

Wherein the roasting yield and the sieving and demagnetizing capacity of the multiple cathode material A13 are shown in Table 1.

The composition, particle size D50, LiOH content, angle of repose, I₍₀₀₆₎/I₍₀₁₂₎, and A₍₀₀₆₎/A₍₀₁₂₎ of this cathode material A13 are shown in Table 2. The gram specific capacity under a voltage of 4.40 V, as well as the cycle retention and DCR increase in a voltage interval of 3-4.45 V of a button cell prepared from this cathode material A13 are shown in Table 3.

### Example 14

A multiple cathode material A14 was prepared according to the method in Example 7, except that:
in the step S1, the molar ratio of nickel to cobalt to manganese in the mixed sulfate solution was Ni:Co:Mn=80:10:9;
in the step S2, a second additive used magnesium tetraboride (MgB₄) instead of barium diboride (BaB₂), and the Mg addition amount was controlled to be [n(Ni)+n(Co)+n(Mn)]:n(Mg)=0.99:0.001;
in the step S3, a third additive used yttrium tetraboride (YB₄) instead of zirconium diboride (ZrB₂), added in an amount controlled to be [n(Ni)+n(Co)+n(Mn)]:n(Y)=0.99:0.001; and a multiple cathode material A14 was prepared, having a composition of Li_{1.08}Ni_{0.8}Co_{0.1}Mn_{0.09}Mg_{0.001}Y_{0.001}B_{0.008}O₂.

Wherein the roasting yield and the sieving and demagnetizing capacity of the multiple cathode material A14 are shown in Table 1.

The composition, particle size D₅₀, LiOH content, angle of repose, I₍₀₀₆₎/I₍₀₁₂₎, and A₍₀₀₆₎/A₍₀₁₂₎ of this cathode material A14 are shown in Table 2. The gram specific capacity under a voltage of 4.40 V, as well as the cycle retention and DCR increase in a voltage interval of 3-4.45 V of a button cell prepared from this cathode material A14 are shown in Table 3.

### Example 15

A multiple cathode material A15 was prepared according to the method in Example 7, except that:
in the step S1, the molar ratio of nickel to cobalt to manganese in the mixed sulfate solution was Ni:Co:Mn=80:10:8.6;
in the step S2, a second additive used barium hexaborate (BaB₆) instead of barium diboride (BaB₂), and the Ba addition amount was controlled to be [n(Ni)+n(Co)+n(Mn)]:n(Ba)=0.986:0.001;
in the step S3, a third additive used lanthanum hexaboride (LaB₆) instead of zirconium diboride (ZrB₂), added in an amount controlled to be [n(Ni)+n(Co)+n(Mn)]:n(La)=0.986:0.001; and a multiple cathode material A15 was prepared, having a composition of Li_{1.08}Ni_{0.8}Co_{0.1}Mn_{0.086}Ba_{0.001}La_{0.001}B_{0.012}O₂.

Wherein the roasting yield and the sieving and demagnetizing capacity of the multiple cathode material A15 are shown in Table 1.

The composition, particle size D₅₀, LiOH content, angle of repose, I₍₀₀₆₎/I₍₀₁₂₎, and A₍₀₀₆₎/A₍₀₁₂₎ of this cathode material A15 are shown in Table 2. The gram specific capacity under a voltage of 4.40 V, as well as the cycle retention and DCR increase in a voltage interval of 3-4.45 V of a button cell prepared from this cathode material A15 are shown in Table 3.

### Comparative example 1

51. A 2 mol/L mixed solution of sulfates of nickel, cobalt and manganese (a molar ratio of Ni:Co:Mn=50:20:29.5), a 2.5 mol/L NaOR solution, 3 mol/L ammonia water, and a 20 gAL PEG1000 dispersing agent aqueous solution were prepared, the solutions were introduced into a reactor in a parallel flow, and a reaction was carried out at a reaction temperature maintained at 60°C and a reaction pH maintained at 12.0. After the reaction was completed, aging was performed for 6h, then subjected to filter pressing, washing, drying at 110°C, and sieving to obtain a multiple cathode material precursor.

S2. The multiple cathode material precursor, lithium carbonate and alumina (Al₂O₃ ) were thoroughly mixed in a high-speed mixer in a ratio of [n(Ni)+n(Co)+n(Mn)]:n(Li):n(Al)=0.995:1.05:0.003, and the obtained mixture was roasted at 1000°C for 12h in dry oxygen atmosphere, and natural cooling, crushing, and sieving to obtain a multiple cathode material process product I.

S3. The a multiple cathode material process product I and yttria (Y₂O₃) were thoroughly mixed in a high-speed mixer in a ratio of [n(Ni)+n(Co)+n(Mn)]:n(Y)=0.995:0.002, the obtained mixture was calcined at 800°C for 8h in a dry air atmosphere, natural cooling, and sieving by a 400-mesh sieve to obtain a multiple cathode material D1 with a composition of Li_{1.05}Ni_{0.5}CO_{0.2}Mn_{0.295}Al_{0.003}Y_{0.002}O₂. The XRD, cycle retention and DCR results of the multiple cathode material D1 are detailed in Figs. 1, 2 and 3, respectively.

Wherein the roasting yield and the sieving and demagnetizing capacity of the multiple cathode material D1 are shown in Table 1.

The composition, particle size D₅₀, LiOH content, angle of repose, I₍₀₀₆₎/I₍₀₁₂₎, and A₍₀₀₆₎/A₍₀₁₂₎ of this cathode material D1 are shown in Table 2. The gram specific capacity under a voltage of 4.40V and 4.45 V, as well as the cycle retention and DCR increase in a voltage interval of 3-4.5 V of a button cell prepared from this cathode material D1 are shown in Table 3.

### Comparative example 2

S1. A 1 mol/L mixed solution of sulfates of nickel, cobalt and manganese (a molar ratio of Ni:Co:Mn=80:10:9.1), a 8 mol/L NaOH solution, 5 mol/L ammonia water, and a 10 gAL PEG1000 dispersing agent aqueous solution were prepared, the solutions were introduced into a reactor in a parallel flow, and a reaction was carried out at a reaction temperature maintained at 60°C and a reaction pH maintained at 12. After the reaction was completed, aging was performed for 12h, then subjected to filter pressing, washing, drying at 110°C, and sieving to obtain a multiple cathode material precursor.

S2. The multiple cathode material precursor, lithium hydroxide and barium hydroxide (Ba(OH)₂) were thoroughly mixed in a high-speed mixer in a ratio of [n(Ni)+n(Co)+n(Mn)]:n(Li):n(Ba)=0.991:1.08:0.001, and the obtained mixture was roasted at 810°C for lOh in dry oxygen atmosphere, and natural cooling, crushing, and sieving to obtain a multiple cathode material process product I.

S3. The multiple cathode material process product 1, zirconia (Zr02) and diboron trioxide (B₂O₃) were thoroughly mixed in a high-speed mixer in a ratio of [n(Ni)+n(Co)+n(Mn)]:n(B)=0.991:0.002:0.006, and the obtained mixture was sieved by a 400-mesh sieve to obtain a multiple cathode material D2 with a composition of Li_{1.08}Ni_{0.8}Co_{0.1}Mn_{0.091}Ba_{0.001}Zr_{0.002}B_{0.006}O₂.

In this cathode material D2, I₍₀₀₆₎/I₍₀₁₂₎=0.42, A₍₀₀₆₎/A₍₀₁₂₎=0.39, cycle retention was 68% and DCR increase was 233%.

Wherein the roasting yield and the sieving and demagnetizing capacity of the cathode material D2 are shown in Table 1.

The composition, particle size D₅₀, LiOH content, angle of repose, I₍₀₀₆₎/I₍₀₁₂₎, and A₍₀₀₆₎/A₍₀₁₂₎ of this cathode material D2 are shown in Table 2. The gram specific capacity under a voltage of 4.35V and 4.40 V, as well as the cycle retention and DCR increase in a voltage interval of 3-4.45 V of a button cell prepared from this cathode material D2 are shown in Table 3.

### Comparative example 3

A multiple cathode material D3 was prepared according to the method in Example 7, except that:
in the step S1, the molar ratio of nickel to cobalt to manganese in the mixed sulfate solution was Ni:Co:Mn=80:10:3;
in the step S2, a second additive used barium hexaborate (BaB₆) instead of barium diboride (BaB₂), and the Ba addition amount was controlled to be [n(Ni)+n(Co)+n(Mn)]:n(Ba)=0.93:0.005;
in the step S3, a third additive used lanthanum hexaboride (LaB₆) instead of zirconium diboride (ZrB₂), added in an amount controlled to be [n(Ni)+n(Co)+n(Mn)]:n(La)=0.93:0.005; and
a cathode material D3 was prepared, having a composition of Li_{1.08}Ni_{0.8}Co_{0.1}Mn_{0.03}Ba_{0.005}Zr_{0.005}B_{0.06}O₂.

Wherein the roasting yield and the sieving and demagnetizing capacity of the cathode material D3 are shown in Table 1.

The composition, particle size D₅₀, LiOH content, angle of repose, I₍₀₀₆₎/I₍₀₁₂₎, and A₍₀₀₆₎/A₍₀₁₂₎ of this cathode material D3 are shown in Table 2. The gram specific capacity under a voltage of 4.40 V, as well as the cycle retention and DCR increase in a voltage interval of 3-4.45 V of a button cell prepared from this cathode material D3 are shown in Table 3.

### Comparative example 4

A multiple cathode material D4 was prepared according to the method in Example 7, except that:
in the step S2, the roasting temperature was 550°C, and the roasting time was 30h; and
a cathode material D4 was prepared, having a composition of Li_{1.08}Ni_{0.8}Co_{0.1}Mn_{0.091}Ba_{0.001}Zr_{0.002}B_{0.006}O₂.

Wherein the roasting yield and the sieving and demagnetizing capacity of the cathode material D4 are shown in Table 1.

The composition, particle size D₅₀, LiOH content, angle of repose, I₍₀₀₆₎/I₍₀₁₂₎, and A₍₀₀₆₎/A₍₀₁₂₎ of this cathode material D4 are shown in Table 2. The gram specific capacity under a voltage of 4.40 V, as well as the cycle retention and DCR increase in a voltage interval of 3-4.45 V of a button cell prepared from this cathode material D4 are shown in Table 3.

**Table 1**

| Example | Roasting yield % | Sieving and demagnetizing capacity kg/h |
|---|---|---|
| Example 1 | 85.9 | 300 |
| Example 2 | 85.0 | 330 |
| Example 3 | 85.2 | 280 |
| Example 4 | 74.5 | 310 |
| Example 5 | 74.0 | 280 |
| Example 6 | 83.9 | 290 |
| Example 7 | 84.1 | 305 |
| Example 8 | 72.3 | 285 |
| Example 9 | 72.2 | 273 |
| Example 10 | 72.0 | 297 |
| Example 11 | 83.5 | 310 |
| Example 12 | 72.3 | 305 |
| Example 13 | 72.2 | 287 |
| Example 14 | 84.3 | 302 |
| Example 15 | 84.6 | 321 |
| Comparative example 1 | 74.0 | 190 |
| Comparative example 2 | 72.0 | 170 |
| Comparative example 3 | 70.8 | 205 |
| Comparative example 4 | 72.1 | 158 |

**Table 2**

| Example | Composition | D₅₀ µm | LiOH content ppm | Angle of repose | I₍₀₀₆₎/I₍₀₁₂₎ | A₍₀₀₆₎/A₍₀₁₂₎ |
|---|---|---|---|---|---|---|
| Example 1 | Li_{1.05}Ni_{0.5}Co_{0.2}Mn_{0.286}Al_{0.003}Y_{0.002}B_{0.009}O₂ | 6 | 1500 | 21 | 1.51 | 1.12 |
| Example 2 | Li_{1.20}Ni_{0.5}Co_{0.2}Mn_{0.24}Al_{0.01}Y_{0.01}B_{0.04}O₂ | 17 | 2000 | 19 | 1.48 | 1.04 |
| Example 3 | LiNi_{0.5}Co_{0.2}Mn_{0.295}Al_{0.001}Y_{0.001}B_{0.003}O₂ | 4 | 1800 | 23 | 1.46 | 0.96 |
| Example 4 | Li_{1.05}Ni_{0.5}Co_{0.2}Mn_{0.286}A1_{0.003}Y_{0.001}B_{0.009}O₂ | 6.5 | 1600 | 24 | 1.37 | 0.91 |
| Example 5 | Li_{1.05}Ni_{0.5}Co_{0.2}Mn_{0.286}Al_{0.003}Y_{0.001}B_{0.009}O₂ | 5.5 | 1900 | 25 | 1.26 | 0.88 |
| Example 6 | Li_{1.03}Ni_{0.65}Co_{0.15}Mn_{0.19}Sr_{0.001}W_{0.002}B_{0.007}O₂ | 4.5 | 1700 | 23 | 0.95 | 0.72 |
| Example 7 | Li_{1.08}Ni_{0.8}Co_{0.1}Mn_{0.091}Ba_{0.001}Zr_{0.002}B_{0.006}O₂ | 11.5 | 1900 | 19 | 0.87 | 0.61 |
| Example 8 | Li_{1.08}Ni_{0.8}Co_{0.1}Mn_{0.091}Ba_{0.001}Zr_{0.002}B_{0.006}O₂ | 10.4 | 2100 | 24 | 0.85 | 0.63 |
| Example 9 | Li_{1.08}Ni_{0.8}Co_{0.1}Mn_{0.095}Ba_{0.001}Zr_{0.002}B_{0.002}O₂ | 10.7 | 1800 | 27 | 0.83 | 0.60 |
| Example 10 | Li_{1.03}Ni_{0.8}Co_{0.1}Mn_{0.092}Ti_{0.001}B_{0.007}O₂ | 9.8 | 2300 | 22 | 0.82 | 0.56 |
| Example 11 | Li_{1.23}Ni_{0.15}Co_{0.14}Mn_{0.70}Sr_{0.001}W_{0.002}B_{0.007}O₂ | 8.9 | 2200 | 18 | 0.80 | 0.55 |
| Example 12 | Li_{1.08}Ni_{0.8}Co_{0.1}Mn_{0.096}Ga_{0.002}P_{0.002}O₂ | 9.8 | 1300 | 25 | 0.86 | 0.65 |
| Example 13 | Li_{1.08}Ni_{0.8}Co_{0.1}Mn_{0.096}Ba_{0.001}Zr_{0.002}B_{0.002}Si_{0.004}O₂ | 10.2 | 1750 | 23 | 0.91 | 0.70 |
| Example 14 | Li_{1.08}Ni_{0.8}Co_{0.1}Mn_{0.09}Mg_{0.001}Y_{0.001}B_{0.008}O₂ | 9.7 | 2100 | 22 | 0.85 | 0.62 |
| Example 15 | Li_{1.08}Ni_{0.8}Co_{0.1}Mn_{0.086}Ba_{0.001}La_{0.001}B_{0.012}O₂ | 9.9 | 1900 | 24 | 0.81 | 0.56 |
| Comparative example 1 | Li_{1.05}Ni_{0.5}Co_{0.2}Mn_{0.295}Al_{0.003}Y_{0.002}O₂ | 3.8 | 900 | 37 | 0.48 | 0.45 |
| Comparative | Li_{1.08}Ni_{0.8}Co_{0.1}Mn_{0.091}Ba_{0.001}Zr_{0.002}B_{0.006}O₂ | 8.0 | 1870 | 42 | 0.42 | 0.39 |
| example 2 | | | | | | |
| Comparative example 3 | Li_{1.08}Ni_{0.8}Co_{0.1}Mn_{0.03}Ba_{0.005}Zr_{0.005}B_{0.06}O₂ | 11.2 | 6500 | 40 | 0.46 | 0.41 |
| Comparative example 4 | Li_{1.08}Ni_{0.8}Co_{0.1}Mn_{0.091}Ba_{0.001}Zr_{0.002}B_{0.006}O₂ | 5.0 | 11800 | 60 | 0.35 | 0.31 |

**Table 3**

| Example | Gram specific capacity | | Cycle retention in 80 cycles % | DCR increase in 80 cycles % |
|---|---|---|---|---|
| | Test voltage V | Gram specific capacity mAh/g | | |
| Example 1 | 4.45 | 191 | 96.2 | 24 |
| Example 2 | 4.45 | 188 | 95.9 | 27 |
| Example 3 | 4.45 | 189 | 95.5 | 26 |
| Example 4 | 4.45 | 186 | 95.0 | 59 |
| Example 5 | 4.45 | 187 | 94.7 | 34 |
| Example 6 | 4.40 | 203 | 89.1^{∗} | 43^{∗} |
| Example 7 | 4.40 | 221 | 83.3^{∗} | 52^{∗} |
| Example 8 | 4.40 | 218 | 82.6^{∗} | 57^{∗} |
| Example 9 | 4.40 | 220 | 81.9^{∗} | 62^{∗} |
| Example 10 | 4.40 | 214 | 79.5^{∗} | 89^{∗} |
| Example 11 | 4.60 | 282 | 82.1 | 92 |
| Example 12 | 4.40 | 217 | 84.1^{∗} | 39^{∗} |
| Example 13 | 4.40 | 218 | 83.7^{∗} | 47^{∗} |
| Example 14 | 4.40 | 213 | 81.7^{∗} | 85^{∗} |
| Example 15 | 4.40 | 212 | 79.1^{∗} | 97^{∗} |
| Comparative example 1 | 4.40 | 178 | 85.4 | 198 |
| | 4.45 | 184 | | |
| Comparative example 2 | 4.35 | 205 | 68.0^{∗} | 233^{∗} |
| | 4.40 | 210 | | |
| Comparative example 3 | 4.40 | 176 | 57.2^{∗} | 563^{∗} |
| Comparative example 4 | 4.40 | 184 | 46.1^{∗} | 1350^{∗} |

| | | | | |
|---|---|---|---|---|
| ^{∗} indicates that cycle retention and DCR increase were tested in a voltage interval of 3-4.45 V, and the rest were tested in a voltage interval of 3-4.5 V. | | | | |

As can be seen from the results of Tables 1-3 and Figs. 2 and 3, the multiple cathode materials prepared in Examples 1-10 in which B, P, or Si was introduced according to the present disclosure have a specific structure with a peak intensity ratio I₍₀₀₆₎/I₍₀₁₂₎ of greater than or equal to 0.8 and a peak area ratio A₍₀₀₆₎/A₍₀₁₂₎ of greater than or equal to 0.5, and can be used in a higher voltage window compared with the multiple cathode materials having a peak intensity ratio I₍₀₀₆₎/I₍₀₁₂₎ of less than 0.8 and a peak area ratio A₍₀₀₆₎/A₍₀₁₂₎ of less than 0.5 in Comparative examples 1 and 2 in which B, P, or Si was not introduced or calcination was not performed after the B element was introduced, wherein the cycle retention and DCR increase in a voltage window of 3.0-4.5 V in Examples 1, 4, and 5 were not only significantly better than the cycle retention and DCR increase under 3.0-4.5 V in Comparative example 1, but also significantly better than the cycle retention and DCR increase in a voltage window of 3.0-4.45 V in Comparative example 1.

Specifically, compared with Comparative example 1, Examples 1, 2, 3, 4, and 5 in which the B element was introduced, a peak intensity ratio I₍₀₀₆₎/I₍₀₁₂₎ was greater than or equal to 0.8, and a peak area ratio A₍₀₀₆₎/A₍₀₁₂₎ was greater than or equal to 0.5 according to the present disclosure achieved significantly higher sieving and demagnetizing capacity, and the prepared multiple cathode material has a smaller angle of repose, and higher LiOH content, and the battery has higher gram specific capacity, better cycle retention, lower DCR increase, etc. when the multiple cathode material is used to prepare a battery.

Specifically, compared with Comparative example 2, Examples 7, 8, 9, 10, 12, and 13 in which the S3 step included the calcination process, the B element and/or the P element and/or the Si element were introduced, a peak intensity ratio I₍₀₀₆₎/I₍₀₁₂₎ was greater than or equal to 0.8, and a peak area ratio A₍₀₀₆₎/A₍₀₁₂₎ was greater than or equal to 0.5 according to the present disclosure achieved significantly higher sieving and demagnetizing capacity, and the prepared multiple cathode material has a smaller angle of repose, and the battery has higher gram specific capacity, better cycle retention, lower DCR increase, etc. when the multiple cathode material is used to prepare a battery.

Specifically, compared with Comparative example 3, Examples 7, 8, 9, 10, 12, and 13 in which parameters 0<*a*≤0.03, 0<*b*≤0.04, and 0<*b*/*a*≤5 within the value range defined in the present disclosure were used, a peak intensity ratio I₍₀₀₆₎/I₍₀₁₂₎ was greater than or equal to 0.8, and a peak area ratio A₍₀₀₆₎/A₍₀₁₂₎ was greater than or equal to 0.5 achieved significantly higher sieving and demagnetizing capacity, and the prepared multiple cathode material has a smaller angle of repose, and the battery has higher gram specific capacity, better cycle retention, lower DCR increase, etc. when the multiple cathode material is used to prepare a battery.

Specifically, compared with Comparative example 4, Examples 7, 8, 9, 10, 12, 13 in which the roasting temperature range defined in the present disclosure was used, a peak intensity ratio I₍₀₀₆₎/I₍₀₁₂₎ was greater than or equal to 0.8, and a peak area ratio A₍₀₀₆₎/A₍₀₁₂₎ was greater than or equal to 0.5 achieved significantly higher sieving and demagnetizing capacity, and the prepared multiple cathode material has a smaller angle of repose, and the battery has significantly higher gram specific capacity, significantly better cycle retention, significantly lower DCR increase, etc. when the multiple cathode material is used to prepare a battery.

Further, Examples 1, 2, and 3 including the low-temperature heat treatment process according to the present disclosure had the effect that the roasting yield was significantly improved compared with Examples 4, and 5, and Comparative example 1 without the low-temperature heat treatment process. Further, Example 7 including the low-temperature heat treatment process according to the present disclosure had the effect that the roasting yield was significantly improved compared with Examples 8, 9, 10, 12, and 13, and Comparative examples 2, 3, and 4 without the low-temperature heat treatment process.

Further, a battery prepared from the multiple cathode material including a preferred first additive in Example 8 according to the present disclosure has higher cycle retention compared with Examples 9-10.

Further, a battery prepared from the multiple cathode material including a preferred second additive in Example 7 according to the present disclosure has higher cycle retention compared with Example 8.

Further, batteries prepared from the multiple cathode materials including a preferred second additive and a preferred third additive in Examples 1, 2, and 3 according to the present disclosure have higher gram specific capacity and cycle retention compared with Examples 4 using a non-preferred second additive and Examples 5 not containing a second additive.

Further, a battery prepared from the multiple cathode material including a preferred third additive in Example 7 according to the present disclosure has higher cycle retention compared with Example 9 using a non-preferred third additive.

Further, batteries prepared from the multiple cathode materials with a smaller *b*/*a* value in Examples 7, 8, and 9 according to the present disclosure have higher cycle retention and lower DCR increase than those in Examples 10 and 15 with a larger *b*/*a* value.

Further, preferred embodiments of the present disclosure are described above in detail, but the present disclosure is not limited thereto. Within the technical concept range of the present disclosure, the technical solution of the present disclosure can be subjected to various simple variations, including the combination of various technical features in any other suitable manner, and these simple variations and combinations should likewise be considered as the contents disclosed by the present disclosure, and all fall within the protection scope of the present disclosure.

## Claims

1. A multiple cathode material, wherein a ratio I₍₀₀₆₎/I₍₀₁₂₎, obtained by means of XRD, of the peak intensity I₍₀₀₆₎ of a (006) crystal plane to the peak intensity I₍₀₁₂₎ of a (012) crystal plane of the multiple cathode material is greater than or equal to 0.8; and
a ratio A₍₀₀₆₎/A₍₀₁₂₎, obtained by means of XRD, of a peak area A₍₀₀₆₎ of the (006) crystal plane to a peak area A₍₀₁₂₎ of the (012) crystal plane of the multiple cathode material is greater than or equal to 0.5.

2. The multiple cathode material according to claim 1, wherein I₍₀₀₆₎/I₍₀₁₂₎≥1;
preferably, A₍₀₀₆₎/A(₀₁₂₎≥0.8.

3. The multiple cathode material according to claim 1 or 2, wherein the multiple cathode material has a composition represented by a general formula I:
Li*ₙ*Ni*ₓ*Co*_{y}*Mn_{1-*x*-*y*-*a*-*b*}M*ₐ*Q*_{b}*O₂ Formula I;
wherein 0.9<*n*<1.3, 0≤*x*<1, 0≤*y*<1, 0≤*a*≤0.04, 0<*b*<0.05, and 0<*b*/*a*<100;
M is at least one of W, Mo, V, Ca, Al, Si, Ni, Mn, Hf, Ta, Y, Sr, Ba, Er, Ga, Mg, Ti, Zr, La, Ce, Co, and Nb; and
Q is at least one of B, P, and Si;
preferably, in the formula I, 1≤*n*≤1.2, 0≤*x*<1, 0≤*y*<1, 0<*a*≤0.03, 0<*b*≤0.04, and 0<*b*/*a*≤20;
M is at least one of W, Al, Si, Ta, Y, Sr, Ga, Mg, Ti, Zr, Co, and Nb;
Q is B; and
preferably, 0<*b*/*a*≤5*.*

4. The multiple cathode material according to any one of claims 1 to 3, wherein the multiple cathode material has a median particle size of 3-20 µm, preferably 4-17 µm;
preferably, the multiple cathode material has an angle of repose of 35° or less, preferably 30° or less; and
preferably, the content of LiOH is 1000-3000 ppm, preferably 1200-2500 ppm, based on the total weight of the multiple cathode material.

5. A method for preparing a multiple cathode material comprising:
(1) preparing a mixed salt solution of a nickel salt, a cobalt salt, and a manganese salt in a molar ratio of n(Ni):n(Co):n(Mn)=*x*:*y*(1-*x*-*y*-*a*-*b*); and preparing a precipitating agent, a complexing agent, a dispersing agent, and optionally a first additive into a precipitating agent solution, a complexing agent solution, a dispersing agent solution, and optionally a first additive mixture, respectively;
(2) separately introducing the mixed salt solution, the precipitating agent solution, the complexing agent solution, the dispersing agent solution and optionally the first additive mixture simultaneously into a reactor for reaction and aging to obtain a solid-liquid mixture;
(3) filter pressing the solid-liquid mixture to obtain a filter cake, washing the filter cake, and drying to obtain a multiple cathode material precursor;
(4) mixing the multiple cathode material precursor, a lithium source and optionally a second additive to obtain a mixture I;
(5) subjecting the mixture I to roasting, cooling, crushing, and sieving to obtain a multiple cathode material process product;
(6) mixing the multiple cathode material process product with optionally a third additive to obtain a mixture II; and
(7) subjecting the mixture II to calcining, cooling, sieving, and demagnetizing to obtain the multiple cathode material;
wherein at least one of the first additive, the second additive, and the third additive is comprised; and at least one of the first additive, the second additive, and the third additive is a compound capable of providing Q.

6. The method according to claim 5, wherein a ratio I₍₀₀₆₎/I₍₀₁₂₎, obtained by means of XRD, of the peak intensity I₍₀₀₆₎ of a (006) crystal plane to the peak intensity I₍₀₁₂₎ of a (012) crystal plane of the multiple cathode material is greater than or equal to 0.8, preferably l₍₀₀₆₎/l₍₀₁₂₎ ≥1;
a ratio A₍₀₀₆₎/A₍₀₁₂₎, obtained by means of XRD, of a peak area A₍₀₀₆₎ of the (006) crystal plane to a peak area A₍₀₁₂₎ of the (012) crystal plane of the multiple cathode material is greater than or equal to 0.5, preferably A₍₀₀₆₎/A₍₀₁₂₎≥0.8;
preferably, the multiple cathode material has a composition represented by a general formula I:
Li*ₙ*Ni*ₓ*Co*_{y}*Mn_{1-*x*-*y*-*a*-*b*}M*ₐ*Q*_{b}*O₂ Formula I;
wherein 0.9≤*n*≤1.3, 0≤*x*<1, 0≤*y*<1, 0≤*a*≤0.04, 0<*b*≤0.05, and 0<*b*/*a*≤100;
M is at least one of W, Mo, V, Ca, Al, Si, Ni, Mn, Hf, Ta, Y, Sr, Ba, Er, Ga, Mg, Ti, Zr, La, Ce, Co, and Nb; and
Q is at least one of B, P, and Si;
preferably 1≤n≤1.2, 0≤x<1, 0≤y<1, 0<a≤0.03, 0<b≤0.04, and 0<b/a≤20;
M is at least one of W, Al, Si, Ta, Y, Sr, Ga, Mg, Ti, Zr, Co, and Nb;
Q is B; and
preferably, 0<b/a≤5.

7. The method according to claim 5 or 6, wherein the first additive, the second additive and the third additive are each independently selected from one or more of compounds capable of providing M and/or Q;
preferably, the first additive is selected from one or more of soluble compounds capable of providing M and/or Q;
preferably, the second additive and the third additive are each independently selected from one or more of the compounds capable of providing M and Q;
preferably, the conditions for the reaction comprise: a reaction temperature of 40-80°C; and a reaction pH of 10-13;
preferably, the aging is performed for 2-8h;
preferably, the multiple cathode material precursor, the lithium source and the second additive are used in amounts such that 0.9≤n(Li)/[n(Ni)+n(Co)+n(Mn)+n(M)+n(Q)]≤1.3;
0≤n(M)/[n(Ni)+n(Co)+n(Mn)+n(M)+n(Q)]≤0.04; and
0≤n(Q)/[n(Ni)+n(Co)+n(Mn)+n(M)+n(Q)]≤0.05;
preferably, the roasting conditions comprise a roasting temperature of 600-1100°C, preferably 700-1000°C, and a roasting time of 4-18h, preferably 6-15h;
preferably, the roasting process is performed in an oxygen-deficient or oxygen-free atmosphere with the oxygen content of less than 20 vol% in a process of heating at 600°C or below, and in an air and/or oxygen atmosphere with the oxygen content of 20 vol% or more at 600°C or above;
preferably, the multiple cathode material process product and the third additive are used in amounts such that 0≤n(M)/[n(Ni)+n(Co)+n(Mn)+n(M)+n(Q)]≤0.04;
0≤n(Q)/[n(Ni)+n(Co)+n(Mn)+n(M)+n(Q)]≤0.05;
preferably, the calcination conditions comprise a calcination temperature of 300-1000°C, preferably 400-900°C, and a calcination time of 4-12h, preferably 6-10h.

8. The method according to any one of claims 5 to 7, wherein the method further comprise: a product obtained after the filter cake is washed, and dried to low-temperature heat treatment to obtain the multiple cathode material precursor;
preferably, the conditions for the low-temperature heat treatment comprise treatment at a temperature of 300-700°C for 3-12h in the presence of air and/or oxygen.

9. A multiple cathode material prepared by the method according to any one of claims 5 to 8.

10. A use of the multiple cathode material according to any one of claims 1 to 4 and claim 9 in a lithium ion battery.
